# EUROPEAN PATENT SPECIFICATION

(11) **EP 4 612 477 B1**
(45) Date of publication and mention of the grant of the patent: **25.11.2026**
(21) Application number: 23801507.7
(22) Date of filing: 30.10.2023
(51) Int. Cl.: G01N 15/06, G01N 15/1433, G01N 15/1429, G01N 15/00, G01N 15/14, G01N 15/075

(54) **APPARATUS FOR CHARACTERISING PARTICLES**
VORRICHTUNG ZUR CHARAKTERISIERUNG VON PARTIKELN
APPAREIL DE CARACTÉRISATION DE PARTICULES

(30) Priority: 02.11.2022 EP 22205103
(43) Date of publication of application: 10.09.2025
(73) Proprietor: Malvern Panalytical Limited, Malvern, Worcestershire WR14 1XZ (GB)
(72) Inventor: LATUNDE-DADA, Seyi, Malvern Worcestershire WR14 1XZ (GB)
(74) Representative: Barker Brettell LLP
(86) International application number: PCT/GB2023/052819
(87) International publication number: WO 2024/094971

(56) References cited:
- MAGNUS RÖDING ET AL: "Measuring absolute number concentrations of nanoparticles using single-particle tracking", PHYSICAL REVIEW E (STATISTICAL, NONLINEAR, AND SOFT MATTER PHYSICS), vol. 84, no. 3, 20 September 2011 (2011-09-20), US, pages 3192085, XP055521644, ISSN: 1539-3755, DOI: 10.1103/PhysRevE.84.031920

## Description

### Field of the invention

The present invention relates to nanoparticle tracking analysis, specifically to apparatuses and methods for measuring particle properties without instrument calibration.

### Background

Nanoparticle tracking analysis (NTA) is a method of characterising particles suspended in a fluid by tracking the movement of individual particles. Typically, the method comprises illuminating a sample comprising a plurality of particles suspended in a fluid, collecting light scattered or fluoresced by the particles, and capturing a video of the particles as they move within the fluid. The video is analysed frame-by-frame to track the movement of the particles, the movement caused by Brownian motion and/or bulk flow. The fluid may be a liquid (e.g. water, or some other liquid), or may be a gas (e.g. air).

It may be desirable to determine the concentration of the particles in the fluid. To calculate concentration, the number of particles within an NTA device's detection region (a three-dimensional volume within the sample that is captured in the video) can be counted. If the volume of the detection region is known, the concentration can be determined from the ratio of the number of particles and the detection region. However, determining the depth of the detection region is difficult. The depth will be dependent on the imaging system itself, environmental factors, and differing optical properties of samples, for example.

Therefore, NTA devices of the prior art require instrument calibration to determine the detection region. Calibration may involve first using a calibration sample to analyse the brightness of particles at different depths within the detection region volume. An example of an NTA calibration method is disclosed in EP3071944.

However, this requires additional steps and time (often taking several hours), precise calibration samples, and may need to be performed regularly in order to maintain accuracy. Thus, NTA methods and apparatuses that do not require calibration pose a significant advantage.

There has been some progress made in developing calibration-free NTA methods. In one calibration-free method, computational modelling of particle movement is used in combination with a priori knowledge of the particle's size (M Röding et al., Physics Review E 84, 031920, 20 September 2011).

Further improvement of calibration-free NTA techniques is desirable.

### Summary

According to a first aspect of the invention, there is provided an apparatus for characterising particles using nanoparticle tracking analysis according to appended claim 1.

The approach is not computationally expensive and enables an accurate determination of the detection region. A track may be defined as a set of vectors defining a change in position of a particle from frame to frame in a video.

The strip may be in the shape of a parallelogram, or a rectangle. The parallel pair of faces may span the width of the video so that the strip spans the width of the video. Alternatively, the strip may not span the entire width of the video, so has a second pair of parallel faces perpendicular to a/the first pair of parallel faces, the strip being a rectangular region inside the video. The strip may be taken in the x or y directions (vertical or horizontal).

The measured property of the tracks may be selected from:
a count of the number of *x*/*y* tracks and the number of *z* tracks observed within a predefined time period;
a measure of the length of the *x*/*y* tracks and the length of the *z* tracks, the length of each track being the distance moved by the particle within the strip; or
a measure of the number of steps within the *x*/*y* tracks and the number of steps within the *z* tracks, the number of steps in each track being the number of frames of the video in which the particle moves within the strip.

The measured property may preferably be the count of the number of *x*/*y* tracks and the number of *z* tracks.

A plurality of strips for each strip width may be analysed, and the measured track property for the plurality of strips of each strip width mathematically combined.

The plurality of strips may be configured to:
cover a substantial portion of or the whole detection region; and/or
cover a plurality of areas of the detection region, the plurality of areas having different detection region depths.

Tracking the particles may comprise identifying a particle from a current frame of the video in a subsequent frame of the video.

Identifying the particle in the subsequent frame of the video may comprise identifying the nearest particle in the subsequent frame.

Identifying the nearest particle in the subsequent frame may comprise identifying the nearest particle within a tracking distance limit.

The computer may be further configured to calculate a concentration of the particles suspended in fluid, calculating the concentration comprising:
calculating the volume of the detection region using the determined depth; and
measuring the number of particles within the detection region.

According to a second embodiment of the invention, there is provided a computer implemented method for determining a depth of a detection region from video data obtained by nanoparticle tracking analysis according to appended claim 11.

According to a third aspect of the invention, there is provided a machine-readable non-volatile storage medium comprising instructions for configuring a processor to perform a method according to appended claim 12.

The features described with reference to the first aspect may also be applied to either of the second aspect or the third aspect, including optional features. The features of each aspect may be combined with those of the example embodiments, and vice versa.

### Detailed description of drawings

Embodiments of the invention will now be described, by way of example only, with reference to the accompanying drawings:
Figure 1 shows an apparatus for characterising particles using NTA according to an embodiment of the present invention;
Figure 2 shows a detection region observed by the NTA apparatus;
Figure 3 shows a current frame and a subsequent frame of a video and illustrates how two-dimensional particle tracking is used in a known NTA process to determine a distance travelled by a particle due to Brownian motion;
Figure 4 shows a particle track resulting from Brownian motion;
Figure 5 shows examples of particle tracks moving into or out of a detection region;
Figure 6 shows particles moving within a subsection of a video and forming in-plane and out-of-plane tracks;
Figure 7 shows a subsection of a video, the subsection having a variable width;
Figure 8 shows an experimental test method used to verify a method according to an embodiment of the present invention;
Figure 9 shows results of the experimental test shown in Figure 8;
Figure 10 shows results of the experimental test shown in Figure 8;
Figure 11 shows the results of a method to calculate concentration of particles according to an embodiment of the present invention.

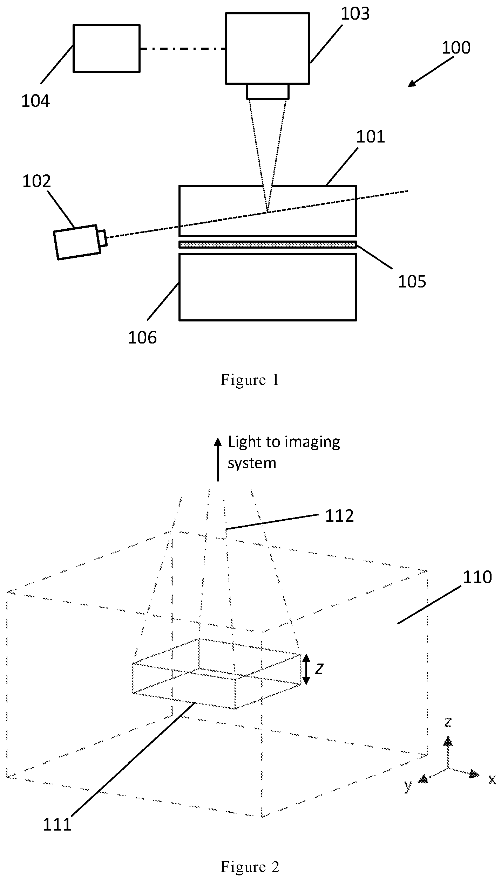

Figure 1 shows an apparatus 100 for characterising particles using nanoparticle tracking analysis (NTA) according to an embodiment of the invention. The apparatus comprises: a cell 101 for containing a sample comprising a plurality of particles suspended in a fluid; a light source 102 configured to illuminate the sample; an imaging system 103 configured to collect light scattered or fluoresced by the particles moving within the cell and within a detection region and capture a video of particles moving within the detection region.

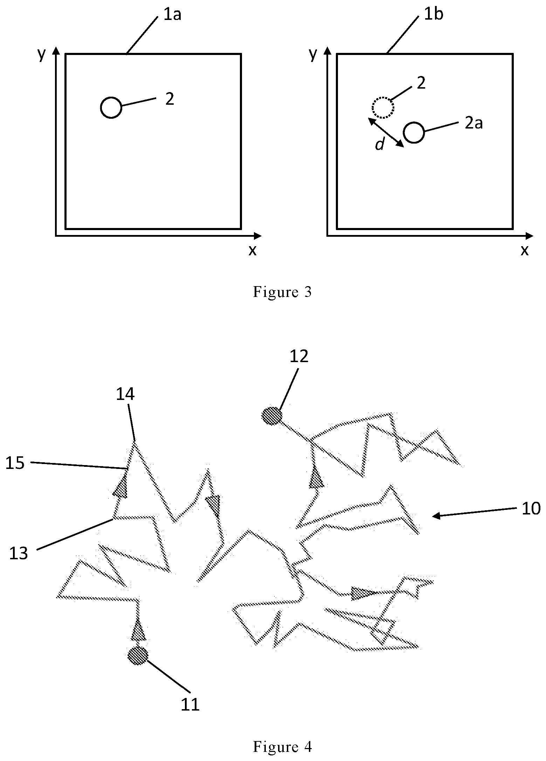

The apparatus 100 further comprises a computer 104 that is configured to process the video. Processing the video comprises tracking particles between subsequent frames of the video, as described in more detail with reference to Figure 3. The computer 104 is configured to track each of the plurality of particles within the detection region and determine a track of each particle's movement across a series of frames. The computer 104 is further configured to determine a depth of the detection region by analysing a measured property of the tracks.

The imaging system 103 may comprise a microscope and a camera configured to capture the video through the microscope. The microscope may, for example, comprise a 20x magnification objective lens and the camera may comprise a charge-coupled device (or CMOS device). The light source 102 may be a laser. In other embodiments, any suitable alternative imaging system and/or light source may be used. For example, the light may be refracted into the sample via a prism or via any other optical arrangement, which may comprise reflectors, lenses, prisms etc.

The apparatus may further comprise a glass wall 106 and a metalized surface 105 arranged between the glass wall 106 and the cell 101. The metalized surface 105 is arranged to reflect light scattered or fluoresced from the particles back towards the imaging system 103, thereby increasing particle contrast. The glass wall 106 may comprise part of a prism configured to refract light from the light source 102 to form a thin sheet of light substantially parallel to the metalized surface 105.

Figure 2 shows a sample volume comprising particles suspended in a fluid dispersant 110. Although not labelled in Figure 2, the volume of particles in sample volume 110 may be bounded by one or more cell walls.

A detection region 111 may comprise a sub-region of the sample volume 110. The detection region 111 is the region of the volume 110 in which light 112 scattered or fluoresced by particles moving within the detection region 111 is detectable by the imaging system. The detection region 111 may be thought of as a three-dimensional 'field of view' of the imaging system. The detection region 111 has a planar area in the x-y plane and a depth z.

Figure 3 illustrates how particle tracking is used in NTA. Figure 3 shows a current frame 1a of a video and a subsequent frame 1b of the video. A particle 2 is shown in the current frame 1a. In the subsequent frame 1b, the particle 2 has moved from the current position (shown as a broken line) to a new position 2a. Between the current frame 1a and subsequent frame 1b the particle 2 has travelled in two dimensions, i.e. in the x-direction and in the y-direction as defined by the axes in Figure 3. The Euclidean distance *d* the particle 2 has moved between the frames 1a, 1b is taken as the distance the particle 2 has moved due to Brownian motion.

In an example, the particle 2 is identified in the subsequent frame 1b using two-dimensional particle tracking. The particle 2 is identified in the subsequent frame 1b as the Euclidean nearest particle to the position of the particle 2 in the current frame 1a. The computer is configured to perform the two-dimensional particle tracking for each of the plurality of particles within the detection region.

The computer may be configured to repeat the tracking process over any suitable number of frames of the video. By tracking each particle across many frames, the computer generates a piecewise particle track for each of the plurality of particles.

The computer may be configured to impose a tracking distance limit when identifying particle 2 in the subsequent frame 1b. The tracking distance limit means that the computer only considers an area within a predetermined distance from the initial particle position 2a when identifying the Euclidean nearest particle. This may mean that particle identification and tracking is performed more efficiently.

Figure 4 shows an example of a particle track 15 formed by a particle as it moves within the fluid. As the movement is due to Brownian motion, the particle is seen to take a 'random walk' between a start position 11 and a subsequent end position 12. In a first frame the particle is at a first position 13. In a second, subsequent frame the particle is at a second position 14. The vector between each successive pair of vertices of the particle track 15 therefore corresponds to the movement of the particle between two successive frames of the video (with each vertex corresponding with a position in a frame).

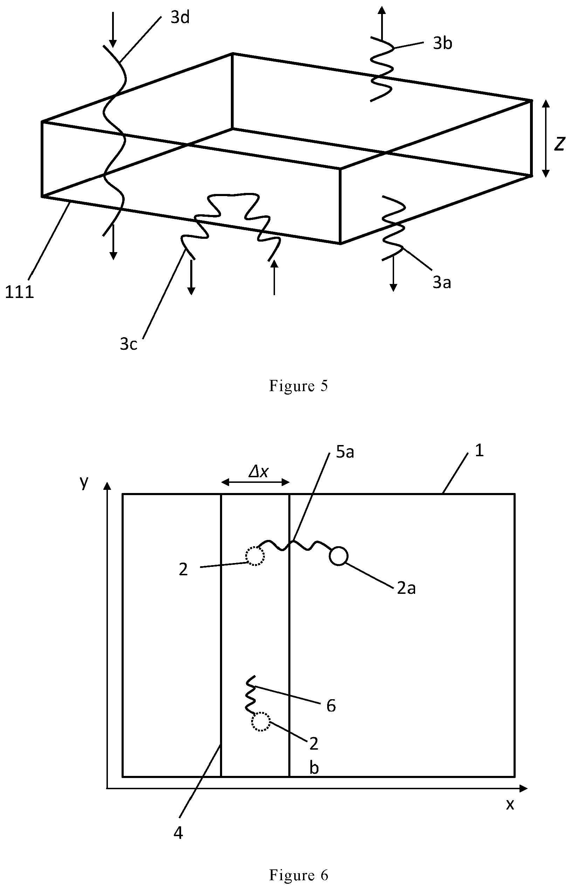

Figure 5 shows examples of particle tracks for particles moving into/out of the detection region 111 in the z direction. Particle track 3a shows a particle leaving the detection region 111 through the bottom face. Particle track 3b shows a particle leaving the detection region 111 through the top face. Particle track 3c shows a particle entering the detection region 111 through the bottom face and subsequently leaving the detection region 111 through the same bottom face. Particle track 3d shows a particle entering the detection region 111 through the top face and subsequently leaving the detection region 111 through the opposing bottom face.

However, the video is of course a two-dimensional image and cannot be used to determine particle positions in the z direction. As such, the particle tracks shown in Figure 5 would be seen in the video as particles appearing/disappearing from the video, as the particles move into/out of the detection region 111 in the z direction.

Particles will similarly enter and exit the detection region in the x and y directions by passing through the side faces of the detection region. The movement of particles is not confined to motion purely along the x,y,z axes. In reality, particle movement will be a three dimensional 'random walk', and each 'step' shall have x, y and z components.

Figure 6 illustrates how a measured property of the particle tracks is used to determine the depth of the detection region according to an embodiment of the invention. Figure 6 schematically illustrates a video image 1. The video 1 may comprise any number of frames in order to show the movement of particles.

The computer is configured to analyse the motion of particles to determine particle tracks, as in conventional NTA. A subsection 4 of the video 1 is defined. The subsection may be a vertical x-strip 4 taken across the video 1, as shown in Figure 6, with a variable strip width *Δx.* The x-strip 4 is defined by a pair of parallel vertical faces that run across the video 1 in the y direction, and by a pair of parallel horizontal faces that run across the video in the x direction. In this example, the horizontal faces are at the edges of the video, and the vertical faces are the full height of the video. Other shapes of strip can also be used.

Figure 6 shows example particle tracks for two particles moving within the strip 4. A first particle is shown to move from a starting position 2 within the strip 4 to a subsequent position 2a outside the strip 4 at an end time. This example first particle moves mainly in the x direction, producing a first particle track 5a. As the first particle moves in the x direction, it remains within the volume of the detection region captured by the video 1. It can consequently be determined by the computer that the first particle track 5a crosses one of the faces of the strip 4.

The computer is configured to classify the first particle track 5a as an *'x* track'. An *x* track is a particle track that is observed to cross one of the parallel vertical faces of the strip 4, corresponding to a particle being observed by the apparatus entering or exiting the strip 4.

A second particle is shown to move from a starting position 2b within the strip 4. The particle moves along a second particle track 6. The second particle has a z axis movement component and exits the strip 4 through the top or bottom face before the end time. As such, the second particle cannot be seen at the end time. The second particle track 6 is observed to end without passing through a face of the strip 4.

The computer is configured to classify the second particle track 6 as a '*z* track' or an 'unobservable track'. A *z* track is particle track that passes through the top or bottom of the detection region, corresponding to a particle entering or exiting the strip 4 without its track passing through one of the faces of the strip 4.

The computer is configured to track a plurality of particles within the strip 4 and classify all particle tracks as *x* tracks and *z* tracks.

In some embodiments of the invention, the parallel pair of vertical faces of the strips may span the entire height of the video, as shown in Figure 6. In other embodiments, the strips may not span the entire height of the video, instead each strip having four faces entirely within the video. This may improve the accuracy of determining the depth of the detection region, by reducing false track classifications.

For example, consider an x-strip taken across the entire height of a video, with a particle very close to the top edge of the strip. If the particle moves in the y direction, it may move off the top of the image (out of the detection region) and therefore not appear in the subsequent video frame. As the computer has not observed the particle exit the strip but the particle has disappeared, this particle may be misidentified as a *z*-track. If, however, the dimensions of the strip are limited to being inside the video image (so that there is a 'border region' around all four sides of the strip), the particle would be observed in the subsequent frame to have moved in the y direction. The computer, configured to classify *x*-tracks and *z*-tracks, may be further configured to discard this particle track from the analysis. The dimensions of the border region may be selected to correspond with a maximum expected movement of the particle between successive frames.

The computer is further configured to analyse a property of the *x* tracks and *z* tracks as the width *Δx* of the strip 4 is varied. The property may be the number of *x* tracks and *z* tracks observed in a defined time-period.

For example, the computer may be configured to analyse a strip width of 100 pixels. The computer would record the number of *x* tracks and *z* tracks observed over a period of time. This process would then be repeated with different strip widths, for example in steps of 1 pixel, 10 pixels, or 50 pixels.

By analysing the change in the number of *x* tracks and *z* tracks recorded, the computer is configured to automatically determine the depth of the detection region.

If a very narrow strip is used (i.e. width *Δx* << depth *z* ), most particle tracks will exit the strip in the x direction before having an opportunity to exit the detection region in the z direction. Therefore, the number of *x* tracks will be large, and the number of *z* tracks will be small. Conversely, if a very wide strip is used (i.e. *Δx* >> *z*), very few particles will exit the strip in the x direction before first exiting the detection region in the z direction. As such, the number of *x* tracks will be small, and the number of *z* tracks will be large.

The computer is configured to find a strip width where the number of *x* tracks and *z* tracks are equal (or at least most similar). The depth z of the detection region is then determined to be the same as this intermediate strip width.

As the movement of the particles of the particles is due to Brownian motion, the movement of the particles is random (stochastic) and will tend towards being equal on average in the x, y, and z directions over a sufficient sample of tracks. Statistically, the number of *x* tracks will tend to equal the number *z* tracks when the width of the strip *Δx* equals the depth of the detection region. This is because when *Δx* = *z,* the surfaces areas of the two vertical strip faces and the top and bottom of the strip are equal. Therefore, the 'flux' of particles moving through these faces should be equal, meaning the number of *x* tracks and *z* tracks is equal.

In many NTA applications, the sample is flowed through the sample cell during measurement. This produces a component of sample movement that is not Brownian. It is known to correct for such particle drift in NTA analysis. Measured particle tracks referred to herein should be understood as being corrected for particle drift. One way to correct for particle drift is to subtract an average velocity of the particles. Since the average Brownian motion is zero over all particles, this will leave only the Brownian component of particle movement.

In other embodiments of the invention, the measured property of the particle tracks may be a property other than the number of tracks. For example, the average length of *x-*tracks and *z*-tracks before the particle exits the strip may be measured and compared. Alternatively, the average number of steps in the *x*-tracks and *z*-tracks before the particle exits the strips may be measured. The number of steps may be the number of frames in which the particle is observed to move. As with number of tracks, track length and step number are random in three directions and expected to be equal for *x*-tracks and *z*-tracks when the intermediate strip width is found.

In some embodiments of the invention, the computer may be configured to analyse a plurality of strips for each strip width. This may improve the accuracy of the depth determination. The plurality of strips may be separate from one another, directly adjacent to each other, or may overlap partially or entirely.

The plurality of strips may be configured to encompass the whole image area. For example, five 100 pixel wide strips could be used to analyse an image 500 pixels wide. In another example, 400 different 100 pixel wide strips can be generated by stepping a 100 pixel wide strip over a 500 pixel wide image with a step of 1 pixel. In some embodiments, the edges of the image may be avoided, so that particles can be tracked across the x and y edges of the strip with greater certainty. For example, an exclusion border may be defined about the edge of the image based on an expected maximum particle movement between successive frames.

Alternatively, the strips may not cover the whole detection region, but could be selected to cover areas of interest in the image. For example, a strip may be taken across the centre of the image, and additional strips taken close to the corners/edges of the image. Many imaging systems have optical aberrations, meaning that the depth of the detection region (i.e. the focal depth) may be different at the centre of the image to the corners/edges of the image. By taking strips at different regions of the image, the computer may be configured to account for differences in detection region depth across the image.

The results for the measured property for each of the plurality of strips of each width may be mathematically combined. For example, the number of tracks across the plurality of strips of each width may be summed (where the same number of strips for each width is used), or a mean or median track length may be calculated for each strip width. Alternatively, results for strips taken in different areas of the image may be kept separate, so that a depth is calculated for a plurality of areas of the detection region. This may allow differences in the depth of the detection region across (such as those caused by optical aberrations) to be calculated.

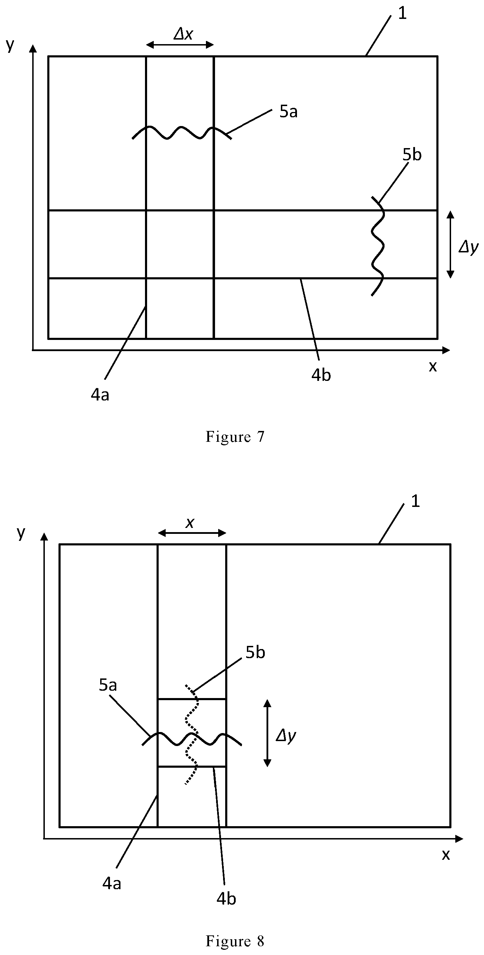

Figure 7 shows how the process described in Figure 6 is equally applicable in the y direction. As discussed, a vertical x-strip 4a of the video 1 may be analysed as the width *Δx* is varied. Equally however, a horizontal y-strip 4b may be analysed as width *Δy* is varied. In this case *y* tracks 5b are classified by the computer rather than *x* tracks 5a, but all of the processing discussed for the x direction case is equally applicable. In some embodiments, the computer may be configured to take a combination of x-strips and y-strips and combine the results to determine the depth of the detection region.

Figure 8 shows a modified version of the process described in Figure 7. This modified process was used in experimental testing to verify the validity of the depth determination technique. The computer is configured to analyse a video 1 of particles moving in the detection region. But rather than trying to determine the depth (in the unobservable z direction), analysis is performed in the observable x and y directions.

The width of strip 4a is set at a known value *x*. A sub-strip 4b is then sampled across the strip 4a, the sub-strip having a variable width *Δy.* The computer is configured to count the number of observed *x* tracks 5a and the number of observed *y* tracks 5b in each of a plurality of sub-strips 4b sampled from the strip 4a as *Δy* was varied. A plurality of y-strips within the x-strip can be defined when the width of the y-strip is less than the total height of the x-strip (for example, the y-strips may be tiled so that they are non-overlapping, or stepped over the x-strip if they are overlapping). For small heights *Δy,* more sub-strips 4b are sampled from the strip 4a. Using the same logic as discussed previously, the number of *x* tracks and y tracks should be equal when *Δy* = *x,* allowing *x* to be determined experimentally.

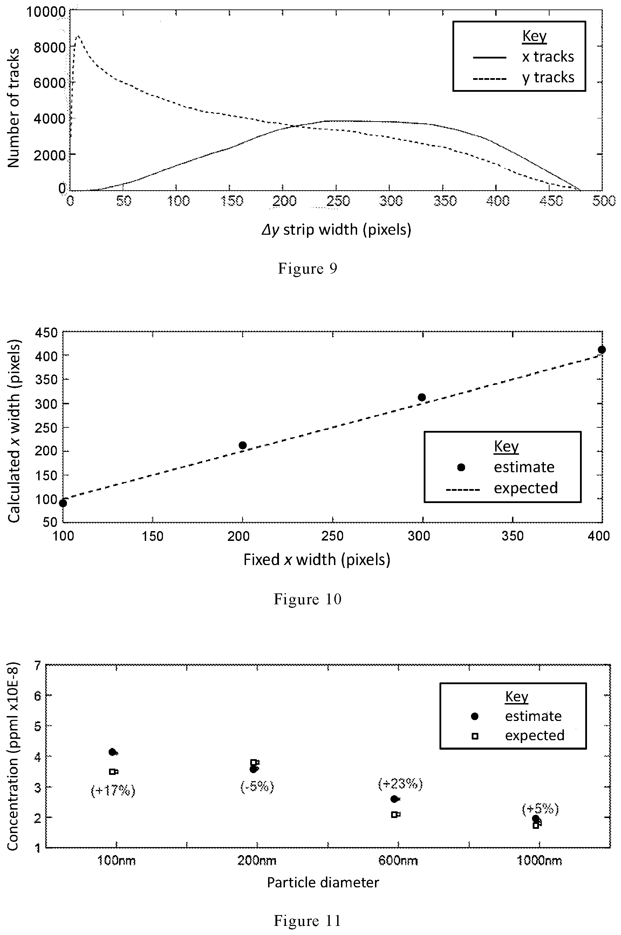

Figure 9 shows a plot of the number of *x* tracks and *y* tracks as a function of *Δy.* In this test the width *x* of the strip 4a was set to 200 pixels, and all possible sub-strips 4b were sampled from strip 4a for each sub-strip width *Δy.* Figure 9 shows that the number of *x* tracks and *y* tracks is equal at approximately 200 pixels, as expected.

As expected, the number of *y* tracks is very high when *Δy* is small and decreases as *Δy* increases. The number of *x* tracks initially increases as *Δy* increases, as expected, but then decreases at higher values of *Δy.* This is because the number of tracks shown in Figure 9 is a cumulative total taken across all possible strips for each *Δy* width. With wider strips, fewer sub-strips 4b can be sampled from the strip 4a, resulting in a decrease in total tracks at high values of *Δy.*

Figure 10 shows a plot wherein the process described in Figure 9 has been repeated for a number of different *x* widths. Figure 10 shows that the calculated value of *x* is close to the known values of *x* = 100, 200, 300 and 400 pixels. The maximum error between the estimate *x* width and the expected value was found to be just 6.5%.

According to another embodiment of the invention, the computer may be further configured to calculate a concentration of the particles in the fluid. The computer may be configured to count the number of particles *N* in the video (corresponding to the number of particles in the detection region). The volume *V* of the detection region can be calculated from the planar area of the detection region (known from the area of the sample captured by the imaging system) and the determined depth. Measurements made in pixels may be converted to physical dimensions using known properties of the apparatus. The concentration *C* may then be calculated as *N*/*V.*

Figure 11 shows experimental concentrations obtained for several samples with differing particle diameter, using an apparatus according to an embodiment of the invention, and following the approach outlined above. Concentrations are given as parts per million (ppml). Figure 11 shows that the estimated concentrations obtained using the apparatus of the present invention is very similar to the known concentrations of the samples.

## Claims

1. An apparatus (100) for characterising particles using nanoparticle tracking analysis, comprising:
a cell (101) for containing a sample comprising a plurality of particles suspended in a fluid;
a light source (102) configured to illuminate the sample;
an imaging system (103) configured to collect light scattered or fluoresced by particles moving within the cell (101) and within a detection region (111) of the imaging system (103) and capture a video (1) of the particles moving within the detection region (111); and
a computer (104) configured to process the video (1) to automatically determine a depth, z, of the detection region (111), determining the depth, z, of the detection region (111) comprising:
tracking the particles moving within the detection region (111), thereby producing a track (5a, 5b, 6) for each of the particles; and
analysing how a measured property of the tracks (5a, 5b, 6) within a subsection (4, 4a, 4b) of the video (1) changes as the size of the subsection (4, 4a, 4b) is varied; wherein
the subsection (4, 4a, 4b) is a strip (4, 4a, 4b) taken across the video (1), the strip (4, 4a, 4b) defined by a parallel pair of faces; wherein
the size of the subsection (4, 4a, 4b) is varied by changing the width, Δ*x*, Δ*y*, of the strip (4, 4a, 4b) between the pair of faces; and
wherein the computer (104) is further configured to record the measured property of the tracks (5a, 5b, 6) as a function of the strip width, Δ*x*, Δ*y*; wherein
the computer (104) is further configured to analyse the tracks (5a, 5b, 6) within the subsection (4, 4a, 4b) in order to classify each of the tracks (5a, 5b, 6) as either:
(i) an *x*/*y* track (5a, 5b), wherein the particle track (5a, 5b) is observed to cross one of the pair of faces; or
(ii) a *z* track (6), wherein the particle track (6) begins and/or ends within the strip (4, 4a, 4b) but is not observed to cross through one of the pairs of faces;
and wherein the computer (104) is further configured to record the measured property separately for the *x*/*y* tracks (5a, 5b) and the z tracks (6); wherein:
the computer (104) is further configured to compare the measured property for the *x*/*y* tracks (5a, 5b) and the measured property for the *z* tracks (6) for each strip width, Δ*x*, Δ*y*; and
the depth, z, of the detection region (111) is determined by finding a strip width, Δ*x*, Δ*y*, where the measured property of the *x*/*y* tracks (5a, 5b) and the *z* tracks (6) are equal or most similar, the determined depth, *z*, of the detection region (111) being equal to the strip width, Δ*x*, Δ*y.*

2. The apparatus of claim 1, wherein the strip is in the shape of a parallelogram or a rectangle.

3. The apparatus (100) of claim 1, wherein the measured property of the tracks (5a, 5b, 6) is selected from:
a count of the number of *x*/*y* tracks (5a, 5b) and the number of *z* tracks (6) observed within a predefined time period;
a measure of the length of the *x*/*y* tracks (5a, 5b) and the length of the *z* tracks (6), the length of each track (5a, 5b, 6) being the distance moved by the particle within the strip (4, 4a, 4b); or
a measure of the number of steps within the *x*/*y* tracks (5a, 5b) and the number of steps within the *z* tracks (6), the number of steps in each track (5a, 5b, 6) being the number of frames of the video (1) in which the particle moves within the strip (4, 4a, 4b).

4. The apparatus (100) of claim 3, wherein the measured property is the count of the number of *x*/*y* tracks (5a, 5b) and the number of *z* tracks (6).

5. The apparatus (100) of any preceding claim, wherein a plurality of strips (4, 4a, 4b) for each strip width, Δ*x*, Δ*y*, are analysed, and the measured track property for the plurality of strips (4, 4a, 4b) of each strip width, Δ*x*, Δ*y*, are mathematically combined.

6. The apparatus (100) of claim 5, wherein the plurality of strips (4, 4a, 4b) are configured to:
cover a substantial portion of or the whole area of the detection region (111); and/or
cover a plurality of areas of the detection region (111), the plurality of areas having different detection region (111) depths.

7. The apparatus (100) of any preceding claim, wherein tracking the particles comprises identifying a particle from a current frame of the video (1) in a subsequent frame of the video (1).

8. The apparatus (100) of claim 7, wherein identifying the particle in the subsequent frame of the video (1) comprises identifying the nearest particle in the subsequent frame.

9. The apparatus (100) of claim 8, wherein identifying the nearest particle in the subsequent frame comprises identifying the nearest particle within a tracking distance limit.

10. The apparatus (100) of any preceding claims, wherein the computer (104) is further configured to calculate a concentration of the particles suspended in fluid, calculating the concentration comprising:
calculating the volume of the detection region (111) using the determined depth, z; and
measuring the number of particles within the detection region (111).

11. A computer implemented method for determining a depth, *z*, of a detection region (111) from video data obtained by nanoparticle tracking analysis, the method comprising:
tracking particles moving within the detection region (111), thereby producing a track (5a, 5b, 6) for each of the particles;
measuring a property of the tracks (5a, 5b, 6) within a subsection (4, 4a, 4b) of the video (1);
analysing how the measured property of the tracks (5a, 5b, 6) within a subsection (4, 4a, 4b) of the video (1) changes as the size of the subsection (4, 4a, 4b) is varied; wherein
the subsection (4, 4a, 4b) is a strip (4, 4a, 4b) taken across the video (1), the strip (4, 4a, 4b) defined by a parallel pair of faces; wherein
the size of the subsection (4, 4a, 4b) is varied by changing the width, Δ*x*, Δ*y*, of the strip (4, 4a, 4b) between the pair of faces; and
wherein the method further comprises recording the measured property of the tracks (5a, 5b, 6) as a function of the strip width, Δ*x*, Δ*y*; wherein
the method further comprises analysing the tracks (5a, 5b, 6) within the subsection (4, 4a, 4b) in order to classify each of the tracks (5a, 5b, 6) as either:
(i) an *x*/*y* track (5a, 5b), wherein the particle track (5a, 5b) is observed to cross one of the pair of faces; or
(ii) a *z* track (6), wherein the particle track (6) begins and/or ends within the strip (4, 4a, 4b) but is not observed to cross through one of the pairs of faces;
and wherein the method further comprises recording the measured property separately for the *x*/*y* tracks (5a, 5b) and the z tracks (6); wherein:
the method further comprises comparing the measured property for the *x*/*y* tracks (5a, 5b) and the measured property for the *z* tracks (6) for each strip width, Δ*x*, Δ*y*; and
the depth, *z*, of the detection region (111) is determined by finding a strip width, Δ*x*, Δ*y*, where the measured property of the *x*/*y* tracks (5a, 5b) and the *z* tracks (6) are equal or most similar, the determined depth, *z*, of the detection region (111) being equal to the strip width, Δ*x*, Δ*y.*

12. A machine-readable non-volatile storage medium comprising instructions for configuring a processor to perform a method according to claim 11.

## Patentansprüche

1. Vorrichtung (100) zum Charakterisieren von Partikeln unter Verwendung einer Nanopartikel-Verfolgungsanalyse, umfassend:
eine Zelle (101) zum Enthalten einer Probe, die eine Vielzahl von Partikeln umfasst, die in einem Fluid suspendiert sind;
eine Lichtquelle (102), die dazu konfiguriert ist, die Probe zu beleuchten;
ein Bildgebungssystem (103), das dazu konfiguriert ist, Licht zu sammeln, das durch Partikel gestreut oder fluoresziert wird, die sich innerhalb der Zelle (101) und innerhalb einer Erkennungsregion (111) des Bildgebungssystems (103) bewegen, und ein Video (1) der Partikel zu erfassen, die sich innerhalb der Erkennungsregion (111) bewegen; und
einen Computer (104), der dazu konfiguriert ist, das Video (1) zu verarbeiten, um automatisch eine Tiefe, *z*, der Erkennungsregion (111) zu bestimmen, wobei das Bestimmen der Tiefe, *z*, der Erkennungsregion (111) Folgendes umfasst:
Verfolgen der Partikel, die sich innerhalb der Erkennungsregion (111) bewegen, wodurch eine Spur (5a, 5b, 6) für jedes der Partikel erzeugt wird; und
Analysieren, wie sich eine gemessene Eigenschaft der Spuren (5a, 5b, 6) innerhalb eines Unterabschnitts (4, 4a, 4b) des Videos (1) ändert, wenn die Größe des Unterabschnitts (4, 4a, 4b) variiert wird; wobei
der Unterabschnitt (4, 4a, 4b) ein Streifen (4, 4a, 4b) ist, der quer über das Video (1) aufgenommen ist, wobei der Streifen (4, 4a, 4b) durch ein paralleles Paar von Flächen definiert ist; wobei
die Größe des Unterabschnitts (4, 4a, 4b) durch Ändern der Breite, Δx, Δ*y,* des Streifens (4, 4a, 4b) zwischen dem Paar von Flächen variiert wird; und
wobei der Computer (104) ferner dazu konfiguriert ist, die gemessene Eigenschaft der Spuren (5a, 5b, 6) in Abhängigkeit von der Streifenbreite, Δx, Δ*y,* aufzuzeichnen; wobei
der Computer (104) ferner dazu konfiguriert ist, die Spuren (5a, 5b, 6) innerhalb des Unterabschnitts (4, 4a, 4b) zu analysieren, um jede der Spuren (5a, 5b, 6) als eines der Folgenden zu klassifizieren:
(i) eine *x*/*y*-Spur (5a, 5b), wobei beobachtet wird, dass die Partikelspur (5a, 5b) eine des Paars von Flächen kreuzt; oder
(ii) eine *z*-Spur (6), wobei die Partikelspur (6) innerhalb des Streifens (4, 4a, 4b) beginnt und/oder endet, aber nicht beobachtet wird, dass sie durch eines der Paare von Flächen kreuzt;
und wobei der Computer (104) ferner dazu konfiguriert ist, die gemessene Eigenschaft separat für die *x*/*y*-Spuren (5a, 5b) und die *z*-Spuren (6) aufzuzeichnen; wobei:
der Computer (104) ferner dazu konfiguriert ist, die gemessene Eigenschaft für die *x*/*y*-Spuren (5a, 5b) und die gemessene Eigenschaft für die *z*-Spuren (6) für jede Streifenbreite, Δx, Δ*y,* zu vergleichen; und
die Tiefe, *z*, der Erkennungsregion (111) durch Finden einer Streifenbreite, Ax, Av, bestimmt wird, wobei die gemessene Eigenschaft der *x*/*y*-Spuren (5a, 5b) und der *z*-Spuren (6) gleich oder äußerst ähnlich ist, wobei die bestimmte Tiefe, *z*, der Erkennungsregion (111) gleich der Streifenbreite, Δx, Δy*,* ist.

2. Vorrichtung nach Anspruch 1, wobei der Streifen die Form eines Parallelogramms oder eines Rechtecks hat.

3. Vorrichtung (100) nach Anspruch 1, wobei die gemessene Eigenschaft der Spuren (5a, 5b, 6) ausgewählt ist aus:
einem Zählwert der Anzahl von *x*/*y*-Spuren (5a, 5b) und der Anzahl von *z*-Spuren (6), die innerhalb eines vordefinierten Zeitraums beobachtet werden;
einem Maß der Länge der *x*/*y*-Spuren (5a, 5b) und der Länge der *z*-Spuren (6), wobei die Länge jeder Spur (5a, 5b, 6) die Entfernung ist, die sich das Partikel innerhalb des Streifens (4, 4a, 4b) bewegt; oder
einem Maß der Anzahl von Schritten innerhalb der *x*/*y*-Spuren (5a, 5b) und der Anzahl von Schritten innerhalb der *z*-Spuren (6), wobei die Anzahl von Schritten in jeder Spur (5a, 5b, 6) die Anzahl von Einzelbildern des Videos (1) ist, in denen sich das Partikel innerhalb des Streifens (4, 4a, 4b) bewegt.

4. Vorrichtung (100) nach Anspruch 3, wobei die gemessene Eigenschaft der Zählwert der Anzahl von *x*/*y*-Spuren (5a, 5b) und der Anzahl von *z*-Spuren (6) ist.

5. Vorrichtung (100) nach einem der vorhergehenden Ansprüche, wobei eine Vielzahl von Streifen (4, 4a, 4b) für jede Streifenbreite, Δx, Δy*,* analysiert ist und die gemessene Spureigenschaft für die Vielzahl von Streifen (4, 4a, 4b) jeder Streifenbreite, Δx, Δy*,* mathematisch kombiniert ist.

6. Vorrichtung (100) nach Anspruch 5, wobei die Vielzahl von Streifen (4, 4a, 4b) zu Folgendem konfiguriert ist:
Abdecken eines wesentlichen Teils von oder des gesamten Bereichs der Erkennungsregion (111); und/oder
Abdecken einer Vielzahl von Bereichen der Erkennungsregion (111), wobei die Vielzahl von Bereichen unterschiedliche Tiefen der Erkennungsregion (111) aufweist.

7. Vorrichtung (100) nach einem der vorhergehenden Ansprüche, wobei das Verfolgen der Partikel Identifizieren eines Partikels aus einem aktuellen Einzelbild des Videos (1) in einem nachfolgenden Einzelbild des Videos (1) umfasst.

8. Vorrichtung (100) nach Anspruch 7, wobei das Identifizieren des Partikels in dem nachfolgenden Einzelbild des Videos (1) Identifizieren des nächstgelegenen Partikels in dem nachfolgenden Einzelbild umfasst.

9. Vorrichtung (100) nach Anspruch 8, wobei das Identifizieren des nächstgelegenen Partikels in dem nachfolgenden Einzelbild Identifizieren des nächstgelegenen Partikels innerhalb einer Verfolgungsabstandsgrenze umfasst.

10. Vorrichtung (100) nach einem der vorhergehenden Ansprüche, wobei der Computer (104) ferner dazu konfiguriert ist, eine Konzentration der in Fluid suspendierten Partikel zu berechnen, wobei das Berechnen der Konzentration Folgendes umfasst:
Berechnen des Volumens der Erkennungsregion (111) unter Verwendung der bestimmten Tiefe, *z*; und
Messen der Anzahl von Partikeln innerhalb des Erkennungsbereichs (111).

11. Computerimplementiertes Verfahren zum Bestimmen einer Tiefe, *z*, einer Erkennungsregion (111) aus Videodaten, die durch Nanopartikel-Verfolgungsanalyse erlangt werden, wobei das Verfahren Folgendes umfasst:
Verfolgen von Partikeln, die sich innerhalb der Erkennungsregion (111) bewegen, wodurch eine Spur (5a, 5b, 6) für jedes der Partikel erzeugt wird;
Messen einer Eigenschaft der Spuren (5a, 5b, 6) innerhalb eines Unterabschnitts (4, 4a, 4b) des Videos (1);
Analysieren, wie sich die gemessene Eigenschaft der Spuren (5a, 5b, 6) innerhalb eines Unterabschnitts (4, 4a, 4b) des Videos (1) ändert, wenn die Größe des Unterabschnitts (4, 4a, 4b) variiert wird; wobei
der Unterabschnitt (4, 4a, 4b) ein Streifen (4, 4a, 4b) ist, der quer über das Video (1) aufgenommen ist, wobei der Streifen (4, 4a, 4b) durch ein paralleles Paar von Flächen definiert ist; wobei
die Größe des Unterabschnitts (4, 4a, 4b) durch Ändern der Breite, Δx, Δy*,* des Streifens (4, 4a, 4b) zwischen dem Paar von Flächen variiert wird; und
wobei das Verfahren ferner Aufzeichnen der gemessenen Eigenschaft der Spuren (5a, 5b, 6) in Abhängigkeit von der Streifenbreite, Δx, Δy*,* umfasst; wobei
das Verfahren ferner Analysieren der Spuren (5a, 5b, 6) innerhalb des Unterabschnitts (4, 4a, 4b) umfasst, um jede der Spuren (5a, 5b, 6) als eines der Folgenden zu klassifizieren:
(i) eine *x*/*y*-Spur (5a, 5b), wobei beobachtet wird, dass die Partikelspur (5a, 5b) eine des Paars von Flächen kreuzt; oder
(ii) eine *z*-Spur (6), wobei die Partikelspur (6) innerhalb des Streifens (4, 4a, 4b) beginnt und/oder endet, aber nicht beobachtet wird, dass sie durch eines der Paare von Flächen kreuzt;
und wobei das Verfahren ferner separates Aufzeichnen der gemessenen Eigenschaft für die x/y-Spuren (5a, 5b) und die *z-*Spuren (6) umfasst; wobei:
das Verfahren ferner Vergleichen der gemessenen Eigenschaft für die x/y-Spuren (5a, 5b) und der gemessenen Eigenschaft für die *z*-Spuren (6) für jede Streifenbreite, Δx, Δy*,* umfasst; und
die Tiefe, *z*, der Erkennungsregion (111) durch Finden einer Streifenbreite, Δx, Δy*,* bestimmt wird, wobei die gemessene Eigenschaft der x/y-Spuren (5a, 5b) und der *z*-Spuren (6) gleich oder äußerst ähnlich ist, wobei die bestimmte Tiefe, *z*, der Erkennungsregion (111) gleich der Streifenbreite, Δx, Δy*,* ist.

12. Maschinenlesbares nichtflüchtiges Speichermedium, umfassend Anweisungen zum Konfigurieren eines Prozessors, um ein Verfahren nach Anspruch 11 durchzuführen.

## Revendications

1. Appareil (100) pour la caractérisation de particules en utilisant une analyse de suivi de nanoparticules, comprenant :
une cellule (101) pour le confinement d'un échantillon comprenant une pluralité de particules en suspension dans un fluide ;
une source de lumière (102) configurée pour l'illumination de l'échantillon ;
un système d'imagerie (103) configuré pour la collecte d'une lumière diffusée ou ayant subi une fluorescence par des particules se déplaçant à l'intérieur de la cellule (101) et à l'intérieur d'une région de détection (111) du système d'imagerie (103) et la capture d'une vidéo (1) des particules se déplaçant à l'intérieur de la région de détection (111) ; et
un ordinateur (104) configuré pour le traitement de la vidéo (1) pour la détermination automatique d'une profondeur, z, de la région de détection (111), la détermination de la profondeur, z, de la région de détection (111) comprenant :
le suivi des particules se déplaçant à l'intérieur de la région de détection (111), produisant ainsi une trace (5a, 5b, 6) pour chacune des particules ; et
l'analyse de la façon dont une propriété mesurée des traces (5a, 5b, 6) à l'intérieur d'une sous-section (4, 4a, 4b) de la vidéo (1) change au fur et à mesure que la taille de la sous-section (4, 4a, 4b) varie ; dans lequel
la sous-section (4, 4a, 4b) est une bande (4, 4a, 4b) prise à travers la vidéo (1), la bande (4, 4a, 4b) étant définie par une paire de faces parallèles ; dans lequel
la taille de la sous-section (4, 4a, 4b) varie par la modification de la largeur, Δx, Δy, de la bande (4, 4a, 4b) entre la paire de faces ; et
dans lequel l'ordinateur (104) est en outre configuré pour l'enregistrement de la propriété mesurée des traces (5a, 5b, 6) en fonction de la largeur de bande, Δx, Δ*y* ; dans lequel
l'ordinateur (104) est en outre configuré pour l'analyse des traces (5a, 5b, 6) à l'intérieur de la sous-section (4, 4a, 4b) afin de classer chacune des traces (5a, 5b, 6) en tant que soit :
(i) une trace *x*/*y* (5a, 5b), dans laquelle il est observé que la trace de particule (5a, 5b) traverse une parmi la paire de faces ; ou
(ii) une trace *z* (6), dans laquelle la trace de particule (6) commence et/ou se termine à l'intérieur de la bande (4, 4a, 4b) mais il n'est pas observé qu'elle traverse à travers une parmi les paires de faces ;
et dans lequel l'ordinateur (104) est en outre configuré pour l'enregistrement de la propriété mesurée séparément pour les traces *x*/*y* (5a, 5b) et les traces *z* (6) ; dans lequel :
l'ordinateur (104) est en outre configuré pour la comparaison de la propriété mesurée pour les traces *x*/*y* (5a, 5b) et de la propriété mesurée pour les traces *z* (6) pour chaque largeur de bande, Δx, Δ*y* ; et
la profondeur, *z*, de la région de détection (111) est déterminée par la découverte d'une largeur de bande, Δx, Δ*y,* où la propriété mesurée des traces *x*/*y* (5a, 5b) et des traces *z* (6) est égale ou la plus similaire, la profondeur déterminée, z, de la région de détection (111) étant égale à la largeur de bande, Δx, Δy*.*

2. Appareil selon la revendication 1, dans lequel la bande est sous la forme d'un parallélogramme ou d'un rectangle.

3. Appareil (100) selon la revendication 1, dans lequel la propriété mesurée des traces (5a, 5b, 6) est choisie parmi :
un comptage du nombre de traces *x*/*y* (5a, 5b) et du nombre de traces *z* (6) observées à l'intérieur d'une période de temps prédéfinie ;
une mesure de la longueur des traces *x*/*y* (5a, 5b) et de la longueur des traces *z* (6), la longueur de chaque trace (5a, 5b, 6) étant la distance parcourue par la particule à l'intérieur de la bande (4, 4a, 4b) ; ou
une mesure du nombre de pas à l'intérieur des traces *x*/*y* (5a, 5b) et du nombre de pas à l'intérieur des traces *z* (6), le nombre de pas dans chaque trace (5a, 5b, 6) étant le nombre de trames de la vidéo (1) dans lesquelles la particule se déplace à l'intérieur de la bande (4, 4a, 4b).

4. Appareil (100) selon la revendication 3, dans lequel la propriété mesurée est le comptage du nombre de traces *x*/*y* (5a, 5b) et du nombre de traces *z* (6).

5. Appareil (100) selon l'une quelconque des revendications précédentes, dans lequel une pluralité de bandes (4, 4a, 4b) pour chaque largeur de bande, Δx, Δy*,* est analysée, et la propriété de trace mesurée pour la pluralité de bandes (4, 4a, 4b) de chaque largeur de bande, Δx, Δy*,* est mathématiquement combinée.

6. Appareil (100) selon la revendication 5, dans lequel la pluralité de bandes (4, 4a, 4b) est configurée pour :
couvrir une portion substantielle ou toute la zone de la région de détection (111) ; et/ou
couvrir une pluralité de zones de la région de détection (111), la pluralité de zones ayant des profondeurs de région de détection (111) différentes.

7. Appareil (100) selon l'une quelconque des revendications précédentes, dans lequel le suivi des particules comprend l'identification d'une particule provenant d'une trame actuelle de la vidéo (1) dans une trame suivante de la vidéo (1).

8. Appareil (100) selon la revendication 7, dans lequel l'identification de la particule dans la trame suivante de la vidéo (1) comprend l'identification de la particule la plus proche dans la trame suivante.

9. Appareil (100) selon la revendication 8, dans lequel l'identification de la particule la plus proche dans la trame suivante comprend l'identification de la particule la plus proche dans les limites d'une distance de suivi.

10. Appareil (100) selon l'une quelconque des revendications précédentes, dans lequel l'ordinateur (104) est en outre configuré pour le calcul d'une concentration des particules en suspension dans un fluide, le calcul de la concentration comprenant :
le calcul du volume de la région de détection (111) en utilisant la profondeur déterminée, *z* ; et
la mesure du nombre de particules à l'intérieur de la région de détection (111).

11. Procédé mis en œuvre par ordinateur pour la détermination d'une profondeur, *z*, d'une région de détection (111) à partir de données vidéo obtenues par une analyse de suivi de nanoparticules, le procédé comprenant :
le suivi de particules se déplaçant à l'intérieur de la région de détection (111), produisant ainsi une trace (5a, 5b, 6) pour chacune des particules ;
la mesure d'une propriété des traces (5a, 5b, 6) à l'intérieur d'une sous-section (4, 4a, 4b) de la vidéo (1) ;
l'analyse de la façon dont la propriété mesurée des traces (5a, 5b, 6) à l'intérieur d'une sous-section (4, 4a, 4b) de la vidéo (1) change au fur et à mesure que la taille de la sous-section (4, 4a, 4b) varie ; dans lequel
la sous-section (4, 4a, 4b) est une bande (4, 4a, 4b) prise à travers la vidéo (1), la bande (4, 4a, 4b) étant définie par une paire de faces parallèles ; dans lequel
la taille de la sous-section (4, 4a, 4b) varie par la modification de la largeur, Δx, Δy*,* de la bande (4, 4a, 4b) entre la paire de faces ; et
dans lequel le procédé comprend en outre l'enregistrement de la propriété mesurée des traces (5a, 5b, 6) en fonction de la largeur de bande, Δx, Δy ; dans lequel
le procédé comprend en outre l'analyse des traces (5a, 5b, 6) à l'intérieur de la sous-section (4, 4a, 4b) afin de classer chacune des traces (5a, 5b, 6) en tant que soit :
(i) une trace *x*/*y* (5a, 5b), dans laquelle il est observé que la trace de particule (5a, 5b) traverse l'une de la paire de faces ; ou
(ii) une trace *z* (6), dans laquelle la trace de particule (6) commence et/ou se termine à l'intérieur de la bande (4, 4a, 4b) mais il n'est pas observé qu'elle traverse à travers l'une des paires de faces ;
et dans lequel le procédé comprend en outre l'enregistrement de la propriété mesurée séparément pour les traces x/y (5a, 5b) et les traces *z* (6) ; dans lequel :
le procédé comprend en outre la comparaison de la propriété mesurée pour les traces x/y (5a, 5b) et de la propriété mesurée pour les traces *z* (6) pour chaque largeur de bande, Δx, Δy ; et
la profondeur, z, de la région de détection (111) est déterminée par la découverte d'une largeur de bande, Δx, Δy, où la propriété mesurée des traces x/y (5a, 5b) et des traces *z* (6) est égale ou la plus similaire, la profondeur déterminée, z, de la région de détection (111) étant égale à la largeur de bande, Δx, Δy.

12. Support de stockage non volatil lisible par machine comprenant des instructions pour la configuration d'un processeur pour la réalisation d'un procédé selon la revendication 11.
